# EUROPEAN PATENT APPLICATION

(11) **EP 3 629 472 A1**
(43) Date of publication of application: **01.04.2020**
(21) Application number: 18197032.8
(22) Date of filing: 27.09.2018
(51) Int. Cl.: H02P 25/22

(54) **A POWER SYSTEM INCLUDING A MULTI-PHASE ELECTRICAL MACHINE**

(71) Applicant: ABB Schweiz AG, 5400 Baden (CH)
(72) Inventor: PERETTI, Luca, 176 75 Järfälla (SE); ZANUSO, Giovanni, 17070 Solna (SE)
(74) Representative: Kolster Oy Ab

(57) **Abstract**

A power system (1) comprising: an n-phase electrical machine (M), where n>3, N power modules, where N≤n, each power module comprising a plurality of power electronic switches, each power module being configured to power a respective subset of unique phases of the n phases, a primary control unit (7a) configured to control all of the N power modules in normal operation of the primary control unit (7a), and a redundant control unit (7b) configured to control all of the N power modules only in case the primary control unit (7a) is subjected to a fault.

## Description

### TECHNICAL FIELD

The present disclosure relates to multi-phase electrical machines, in particular to such electrical machines which have more than 3 phases.

### BACKGROUND

The principles of energy conversion that allowed the conception and manufacturing of the first electrical machines were known several decades earlier than the early application of semiconductor technology for electrical drives. Although the introduction of variable-speed drives has completely changed the scenario in the energy conversion area ever since, the standardization of the number of phases for the machines was already settled well before this change happened. Thus, the number of phases in a drive was de-facto settled by the object that they were connected to.

The situation has not changed much since. The vast majority of electrical machines are manufactured with three phases. The choice is supported by the fact that several applications are still employing electrical machines running at constant speed and do not have any special dynamic requirement, thus not requiring any variable-speed drive. In such cases, the electrical machine is directly connected to the AC grid, where having three phases is almost a necessity.

However, while the mainstream activities in research, design, control and engineering for electrical machines is today concentrated on 3-phase synchronous or induction ones, there are certain application cases where the number of phases is not considered as a given and unchangeable number. On the contrary, number of phases greater than three ensures a further degree of freedom in the design stage, which can be exploited for a further optimisation of the energy conversion process.

Two major areas are visibly exploring and already using electrical machines with more than three phases, in the following also referred to as multi-phase machines. The first area relates to high-power energy conversion and the second area deals with the integration of converters and electrical machines in a single, packaged product.

Applications belonging to the first area range from wind energy to marine propulsion, but any multi-megawatt machine employed for generation or motoring purposes could be encompassed as well. As regards to the second area, the mainstream application today is related to electric traction, where the demanding needs in terms of space, volume and dynamic performance are questioning the basic principles of machine and converter design.

Should the design choice fall on a multi-phase machine, an increased number of converters are typically required. Such multi-phase machine topologies may have a large drawback, as they may not be fault-tolerant by considering a control hardware perspective. In other words, should a failure occur in the control and/or voltage modulation hardware of the drive, and not in any power component of the converters, the entire system is forced to switch off.

CN104184285 A discloses a double redundancy six-phase motor for improving the reliability of the system. The system comprises two controllers and two six-phase converters, with the converters being controlled in parallel by a respective controller. One drawback with this system is that it employs two power converters for the same number (six) of electrical phases. More hardware is hence required. Additionally, the converters are six-phase converters, which must be custom-designed since they are non-standard, and so must the control algorithms for controlling the converters.

### SUMMARY

In view of the above, an object of the present disclosure is to provide a power system which solves, or at least mitigates, the problems of the prior art.

There is hence according to a first aspect of the present disclosure provided a power system comprising: an n-phase electrical machine, where n>3, N power modules, where N≤n, each power module comprising a plurality of power electronic switches, each power module being configured to power a respective subset of unique phases of the n phases, a primary control unit configured to control all of the N power modules in normal operation of the primary control unit, and a redundant control unit configured to control all of the N power modules only in case the primary control unit is subjected to a fault.

Thus, redundancy on the control side may be provided. In particular, in case the primary control unit is subjected to a fault the redundant control unit takes over control of all the power modules thus ensuring continued operation of the power system. Better reliability of the control may thereby be provided, at a lower cost and smaller footprint than the solution disclosed in CN104184285 A.

Control of all of the power modules may be transitioned from the primary control unit to the redundant control unit in response to the primary control unit being subjected to a fault.

Faults may be hardware faults, for example caused by improper mounting of the control unit, e.g. loose cabling and/or improper seating, a power supply failure, or a fault in any of the hardware components of the control unit board. Faults may also be software faults, caused by crashes or infinite loops in the code, too lengthy execution of the code which causes an over-run of the processing circuitry, or by some user-generated faults.

According to one embodiment each subset consists of m phases, where m=n/N. The integer m may for example be equal to 3.

According to one embodiment each of the primary control unit and the redundant control unit is configured to control the N power modules by sending gate commands to all of the N power modules. Hence, no control intelligence is required in the power modules as they receive the gate commands, i.e. commands for switching the power electronic switches. The gate commands have been determined by the central primary control unit or by the central redundant control unit in case the primary control unit has been subjected to a fault. The power modules may thus for example only include the power electronic switches, a DC link, and means for receiving the gate commands.

One embodiment comprises a control source switch configured to be in a first state during normal operation of the primary control unit, enabling gate commands to be provided to the power modules only from the primary control unit, and wherein the control source switch is configured to be set from the first state to a second state in response to the primary control unit being subjected to a fault, enabling gate commands to be provided to the power modules only from the redundant control unit.

One embodiment comprises a status detector, wherein the primary control unit is configured to periodically send a status signal to the redundant control unit, and wherein the status detector is configured to control the control source switch based on the status signal.

According to one embodiment the status detector is configured to set the control source switch in the second state in case the status detector fails to detect the status signal within a predetermined period of time. The case in which the status detector fails to detect the status signal within a predetermined period of time is an indication that the primary control unit has been subjected to a fault, and therefore the redundant control unit is connected to all of the power modules to control the power modules.

According to one embodiment the status detector is configured to enable operation of the redundant control unit in case the status detector fails to detect the status signal within a predetermined period of time. The redundant control unit may thereby be activated, for example to commence determining on-line estimated parameters, regulator parameters and internal state variables periodically, which previously may have been received by the redundant control unit from the primary control unit.

According to one embodiment the status detector is configured to acknowledge to the primary control unit that it has detected the status signal.

According to one embodiment the primary control unit is configured to send on-line estimated parameters, regulator parameters and internal state variables periodically to the redundant control unit, whereby the redundant control unit is updated of an operation of the primary control unit. The redundant control unit will thereby be provided with a perfect copy of the state of the primary control unit.

According to one embodiment the redundant control unit is configured to send an acknowledgement that it has been updated of the operation of the primary control unit. In this manner, malfunctioning of the redundant control unit may be detected by the primary control unit, for example if the primary control unit does not receive the acknowledgement.

One embodiment comprises a first power supply configured to power the primary control unit and a second power supply configured to power the redundant control unit. Additional safety may thereby be provided, e.g. in the event that the first power supply breaks down.

According to one embodiment n is 6, 9 or 12. The electrical machine may hence for example be a 6-phase, a 9-phase or a 12-phase electrical machine.

According to one embodiment only the primary control unit is configured to perform electrical machine system identification during commissioning, and wherein the primary control unit is configured to send results of the electrical machine system identification to the redundant control unit.

According to one embodiment the primary control unit and the redundant control unit are configured to base control of the electrical machine on a set of equations which take into account each odd harmonic until the n^{th} harmonic in case n is odd and until the (n-1)^{th} harmonic in case n is even. Better modelling of the electrical machine may thereby be obtained, resulting in a cleaner output current from the electrical machine and also less losses.

Gate commands to all of the power modules may thus be determined based on these equations.

According to one embodiment the power modules are voltage source inverters.

The power system may comprise more than one redundant control unit. The redundant control units may have an order by which they are connected to all of the N power modules in case a redundant control unit having taken over as primary control unit due to a fault in the original primary control unit is also subjected to a fault. The number of redundant control units employed may be based on the desired degree of redundancy for a particular application.

A method of controlling a power system comprising an n-phase electrical machine, where n>3, N power modules, where N≤n, each power module comprising a plurality of power electronic switches, each power module powering a respective subset of unique phases of the n phases, a primary control unit controlling all of the N power modules in normal operation of the primary control unit, wherein the method comprises: switching, in response to a fault of the primary control unit, to a redundant control unit to control all of the N power modules.

Generally, all terms used in the claims are to be interpreted according to their ordinary meaning in the technical field, unless explicitly defined otherwise herein. All references to "a/an/the element, apparatus, component, means, etc." are to be interpreted openly as referring to at least one instance of the "element, apparatus, component, means, etc.", unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows an example of a power system;
Fig. 2 schematically shows a block diagram illustrating control operation when a primary control unit is operating normally;
Fig. 3 schematically shows a block diagram illustrating control operation of when the primary control unit has been subjected to a fault; and
Fig. 4 schematically shows a block diagram of commissioning of the n-phase electrical machine.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

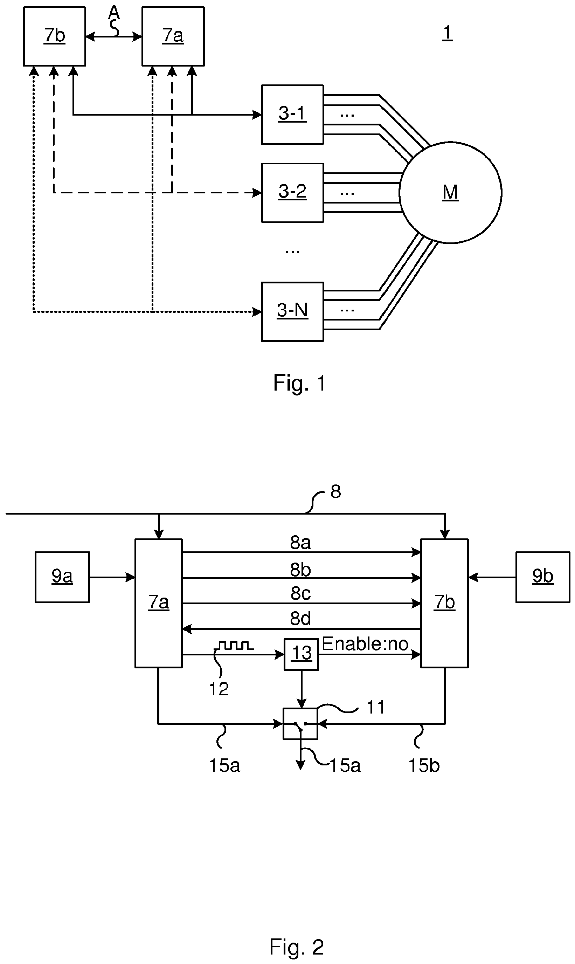

Fig. 1 shows an example of a topology of a power system 1. The power system 1 comprises an n-phase electrical machine M. The number of electrical phases n may for example be an integer multiple of 3. The n-phase electrical machine M may hence for example be a 6-phase, a 9-phase or a 12-phase electrical machine. Other configurations are also envisaged, for example a 5-phase or 7-phase electrical machine. The n-phase electrical machine M may be a machine such as a synchronous or asynchronous motor or generator.

The power system 1 comprises a plurality of power modules 3-1 to 3-N. N is an integer smaller than or equal to n. Each power module 3-1 to 3-N comprises a plurality of power electronic switches (not shown), such as transistors e.g. insulated gate bipolar transistors (IGBT) arranged in a power converting configuration. Each power modules 3-1 to 3-N is a power converter, such as a voltage source inverter. The power modules 3-1 to 3-N may be configured to operate as 2-level power modules, or more generally as q-level power modules, where q is larger than 2. A 2-level power module is one which can provide only two power levels as output, such as 0 V and another voltage level, i.e. an on and an off level, corresponding to the on and off states of the power electronic switches. A q-level power module is a multilevel converter with q levels, where q>2. A q-level power module can hence generate q power levels as output by means of a plurality of series-connected power electronic switches in each leg of the power module.

Each power module 3-1 to 3-N is configured to be connected to a respective subset of unique phases of the n phases. Each phase n is hence only connected to one power module 3-1 to 3-N. In the example shown in Fig. 1, the n-phase electrical machine M has n=N*m phases, where m is the number of unique phases connected to each power module 3-1 to 3-N. Thus, in this example each power module 3-1 to 3-N is connected to m phases, with power module 3-1 being connected to phases 1 to m, power module 3-2 being connected to phases m+1 to 2m, and so on until power module 3-N which is connected to phases n-m+1 to n. The integer m may for example be 3, but could in general be any integer. In case m=3, the power modules 3-1 to 3-N may beneficially be standard 3-phase power modules.

The power system 1 furthermore comprises a primary control unit 7a and a redundant control unit 7b. The primary control unit 7a is configured to control all of the N power modules 3-1 to 3-N when the primary control unit 7a operates normally, i.e. without fault. Control of the power modules 3-1 to 3-N is hence centralised. Due to the centralised control, current circulation may be avoided between the power modules 3-1 to 3-N.

The redundant control unit 7b is configured to control all of the N power modules 3-1 to 3-N only in case the primary control unit 7a is subjected to a fault. To this end, the primary control unit 7a and the redundant control unit 7b are configured such that in the event that the primary control unit 7a is subjected to a fault, the responsibility to control the power modules 3-1 to 3-N is transferred to the redundant control unit 7b. In particular, control of the power modules 3-1 to 3-N is switched from the primary control unit 7a to the redundant control unit 7b.

The primary control unit 7a and the redundant control unit 7b may be configured to communicate with each other, as indicated by arrow A. The primary control unit 7a may for example provide updates of the state of the primary control unit 7a to the redundant control unit 7b and the redundant control unit 7b may be configured to acknowledge reception of the updated states, to thereby provide a seamless or essentially seamless transition from the primary control unit 7a to the redundant control unit 7b in the event of a fault in the primary control unit 7a.

In normal operation of the primary control unit 7a, the primary control unit 7a is configured to generate and send gate commands to all of the power modules 3-1 to 3-N for controlling the n-phase electrical machine M. The power modules 3-1 to 3-N preferably do not contain any control logic, and switching of the power electronic switches is hence provided by the gate commands sent by the primary control system 7a. In case of a fault of the primary control unit 7a, the redundant control unit 7b takes over the responsibility from the primary control unit 7a, and from this point the redundant control unit 7b generates and sends the gate commands to all of the power modules 3-1 to 3-N for controlling the n-phase electrical machine M.

Fig. 2 shows a block diagram including the primary control unit 7a and the redundant control unit 7b in one exemplary operation when the primary control unit 7a controls all of the N power modules 3-1 to 3-N.

The primary control unit 7a is configured to obtain power module measurements 8, such as phase currents, a DC-bus voltage, and optionally angular position/speed measurements of the n-phase electrical machine M. The necessity of the latter measurement may depend on the type of control employed, e.g. scalar or vector control, where the latter but not the former may require angular position/speed measurements, unless estimated. The redundant control unit 7b may also be configured to obtain the power module measurements, and optionally angular position/speed measurements of the n-phase electrical machine M. The primary control unit 7a may be configured to determine the gate commands based on the power module measurements and optionally the angular position/speed measurements. The primary control unit 7a may be configured to estimate parameters such as speed, resistances and inductances on-line, obtain regulator parameters modified in real-time, and obtain internal state variables such as integrator states and counters, preferably in each control cycle in order to determine the gate commands. The primary control unit 7a may be configured to send the on-line estimated parameters 8a, the regulator parameters 8b and the internal state variables 8c periodically to the redundant control unit 7b, for example in each control cycle. The redundant control unit 7b is thereby updated of the current operation of the primary control unit 7a and of the state of the n-phase electrical machine M. The redundant control unit 7b may be configured to send an acknowledgement 8d to the primary control unit 7a that it has received the on-line estimated parameters, the regulator parameters and the internal state variables from the primary control unit 7a.

In the example shown in Fig. 2, the power system 1 has a first power supply 9a configured to power the primary control unit 7a, and a second power supply 9b configured to power the redundant control unit 7b. The first power supply 9a and the second power supply 9b are separate units, operating independently of each other. Better reliability of the power system 1 may thereby be obtained. Alternatively, the primary control unit 7a and the redundant control unit 7b may both be configured to be powered by a common power supply.

The exemplified power system 1 furthermore comprises a control source switch 11. The control source switch 11 is configured to switch between the output of the primary control unit 7a and the output of the redundant control unit 7b. The control source switch 11 is configured to be set in a first state as long as the primary control unit 7a is in normal operation to thereby connect the output of the primary control unit 7a to the power modules 3-1 to 3-N. In the first state, the gate commands generated by the primary control unit 7a are provided to all of the power modules 3-1 to 3-N. The control source switch 11 is configured to be set in a second state in response to the primary control unit 7a being subjected to a fault. The control source switch 11 remains in the second state as long as the primary control unit 7a is subjected to a fault. In the second state, the gate commands generated by the redundant control unit 7b are provided to all of the power modules 3-1 to 3-N.

The power system 1 may comprise a status detector 13. The status detector 13 is configured to determine whether the primary control unit 7a operates normally or is subjected to a fault. The status detector 13 is configured to control the operation of the control source switch 11. Thus, in case the status detector 13 detects that the primary control unit 7a is subjected to a fault, it sets the control source switch 11 in the second state from the first state. The status detector 13 may also enable or activate the redundant control unit 7b in case it detects that the primary control unit 7a is subjected to a fault. The redundant control unit 7b will as a result commence estimating parameters such as speed, resistances and inductances on-line, obtaining regulator parameters modified in real-time, and obtaining internal state variables such as integrator states and counters, which previously was carried out by the primary control unit 7a.

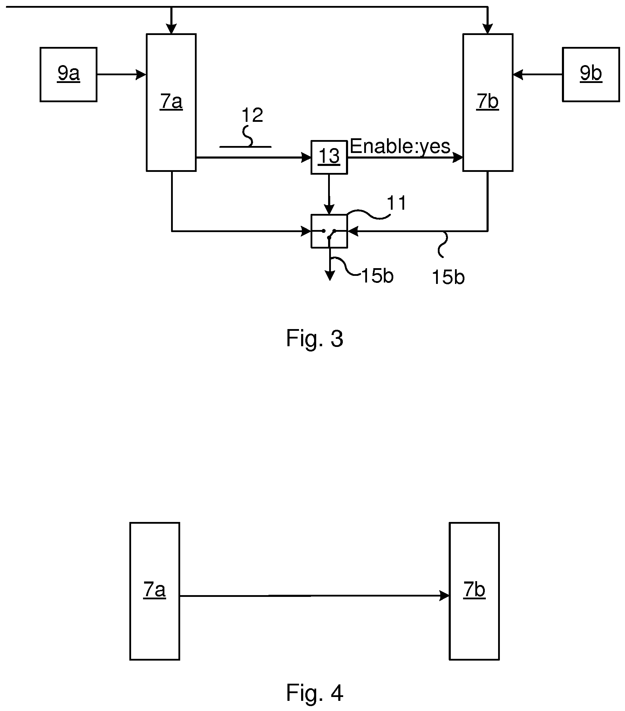

The primary control unit 7a may be configured to periodically send a status signal 12 to the status detector 13 when operating normally, i.e. when being healthy. The status signal 12 may for example be a square or pulse wave, which for example may have a periodicity of one control cycle. The status detector 13 may be configured to set the control source switch 11 in the second state from the first state, and optionally to enable/activate the redundant control unit 7b in case it has not received or detected the status signal 12 within a predetermined period of time. In such case, the gate commands 15b of the redundant control unit 7b instead of the gate commands 15a of the primary control unit 7a will be sent to the N power modules 3-1 to 3-N. This situation is shown in Fig. 3, which illustrates the case when the primary control unit 7a is defective. The control source switch 11 is set in the second state from the default first state, and the redundant control unit 7b is activated by the status detector 13. The redundant control unit 7b is hence connected to the N power modules 3-1 to 3-N. The gate commands 15b are thus sent to the power modules 3-1 to 3-N. Since the redundant control unit 7b is fully updated with the on-line estimated parameters, the regulator parameters and the internal state variables, the transition from the primary control unit 7a to the redundant control unit 7b may be performed essentially seamlessly.

According to one example, the power system may comprise one or more redundant control units in addition to the redundant control unit 7b. Each such additional redundant control unit may be configured in the same manner as the redundant control unit 7b. The control source switch 11 may in such embodiments be configured to determine which of the additional redundant control units is to replace the current primary control unit in the event of a fault. The more redundant control units provided the better reliability of the power system, since it may withstand faults of multiple control units.

Fig. 4 depicts an example of commissioning of the power system 1. The primary control unit 7a is configured to perform electrical machine system identification of the n-phase electrical machine M, for example by means of an ad-hoc identification run of the n-phase electrical machine M under different voltage input signals. According to this example, the redundant control unit 7b does not participate in generating the voltage input signals or in the measurements from the n-phase electrical machine M. Once the commissioning phase has been completed, the n-phase electrical machine parameters, such as stator resistance, inductances and magnetic saturation curves, measured or estimated by the primary control unit 7a, and current and speed regulator parameters may be sent by the primary control unit 7a to the redundant control unit 7b for storage. The primary control unit 7a may also send a parameter configuration list to the redundant control unit 7b in order to obtain a perfect copy of the state of the primary control unit 7a.

The control algorithm for controlling the n-phase electrical machine M stored in the primary control unit 7a and the redundant control unit 7b may be based on a set of equations which take into account each odd harmonic until the n^{th} harmonic in case n is odd and until the (n-1)^{th} harmonic in case n is even. A more accurate model of the n-phase electrical machine M is thereby obtained, resulting in a cleaner current output from the n-phase electrical machine M.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A power system (1) comprising:
an n-phase electrical machine (M), where n>3,
N power modules (3-1, 3-2, 3-N), where N≤n, each power module (3-1, 3-2, 3-N) comprising a plurality of power electronic switches, each power module (3-1, 3-2, 3-N) being configured to power a respective subset of unique phases of the n phases,
a primary control unit (7a) configured to control all of the N power modules (3-1, 3-2, 3-N) in normal operation of the primary control unit (7a), and
a redundant control unit (7b) configured to control all of the N power modules (3-1, 3-2, 3-N) only in case the primary control unit (7a) is subjected to a fault.

2. The power system (1) as claimed in claim 1, wherein each subset consists of m phases, where m=n/N.

3. The power system (1) as claimed in any of the preceding claims, wherein each of the primary control unit (7a) and the redundant control unit (7b) is configured to control the N power modules (3-1, 3-2, 3-N) by sending gate commands to all of the N power modules (3-1, 3-2, 3-N).

4. The power system (1) as claimed in any of the preceding claims, comprising a control source switch (11) configured to be in a first state during normal operation of the primary control unit (7a), enabling gate commands (15a) to be provided to the power modules (3-1, 3-2, 3-N) only from the primary control unit (7a), and wherein the control source switch (11) is configured to be set from the first state to a second state in response to the primary control unit (7a) being subjected to a fault, enabling gate commands (15b) to be provided to the power modules (3-1, 3-2, 3-N) only from the redundant control unit (7b).

5. The power system (1) as claimed in claim 4, comprising a status detector (13), wherein the primary control unit (7a) is configured to periodically send a status signal (12) to the redundant control unit (7b), and wherein the status detector (13) is configured to control the control source switch (11) based on the status signal (12).

6. The power system (1) as claimed in claim 5, wherein the status detector (13) is configured to set the control source switch (11) in the second state in case the status detector (13) fails to detect the status signal (12) within a predetermined period of time.

7. The power system (1) as claimed in claim 5 or 6, wherein the status detector (13) is configured to enable operation of the redundant control unit (7b) in case the status detector (13) fails to detect the status signal (12) within a predetermined period of time.

8. The power system (1) as claimed in any of the preceding claims, wherein the status detector (13) is configured to acknowledge to the primary control unit (7a) that it has detected the status signal (12).

9. The power system (1) as claimed in any of the preceding claims, wherein the primary control unit (7a) is configured to send on-line estimated parameters (8a), regulator parameters (8b) and internal state variables (8c) periodically to the redundant control unit (7b), whereby the redundant control unit (7b) is updated of an operation of the primary control unit (7a).

10. The power system as claimed in claim 9, wherein the redundant control unit (7b) is configured to send an acknowledgement (8d) that it has been updated of the operation of the primary control unit (7a).

11. The power system (1) as claimed in any of the preceding claims, comprising a first power supply (9a) configured to power the primary control unit (7a) and a second power supply (9b) configured to power the redundant control unit (7b).

12. The power system (1) as claimed in any of the preceding claims, wherein n is 6, 9 or 12.

13. The power system (1) as claimed in any of the preceding claims, wherein only the primary control unit (7a) is configured to perform electrical machine system identification during commissioning, and wherein the primary control unit (7a) is configured to send results of the electrical machine system identification to the redundant control unit (7b).

14. The power system (1) as claimed in any of the preceding claims, wherein the primary control unit (7a) and the redundant control unit (7b) are configured to base control of the electrical machine (M) on a set of equations which take into account each odd harmonic until the n^{th} harmonic in case n is odd and until the (n-1)^{th} harmonic in case n is even.

15. A method of controlling a power system (1) comprising an n-phase electrical machine (M), where n>3, N power modules (3-1, 3-2, 3-N), where N≤n, each power module (3-1, 3-2, 3-N) comprising a plurality of power electronic switches, each power module (3-1, 3-2, 3-N) powering a respective subset of unique phases of the n phases, a primary control unit (7a) controlling all of the N power modules (3-1, 3-2, 3-N) in normal operation of the primary control unit (7a), wherein the method comprises:
switching, in response to a fault of the primary control unit (7a), to a redundant control unit (7b) to control all of the N power modules (3-1, 3-2, 3-N).
